# FASCICULE DE BREVET EUROPEEN

(11) **EP 3 156 615 B1**
(45) Date de publication et mention de la délivrance du brevet: **31.07.2019**
(21) Numéro de dépôt: 16192573.0
(22) Date de dépôt: 06.10.2016
(51) Int. Cl.: F01D 25/02, F02K 3/06, F02C 7/047

(54) **DISPOSITIF DEGIVRANT DE BEC DE SEPARATION DE COMPRESSEUR DE TURBOMACHINE AXIALE**
ENTEISUNGSVORRICHTUNG FÜR TRENNSCHNABEL EINES KOMPRESSORS EINER AXIALEN TURBOMASCHINE
DE-ICING DEVICE FOR A SPLITTER NOSE OF AN AXIAL TURBINE ENGINE COMPRESSOR

(30) Priorité: 15.10.2015 BE 201505662
(43) Date de publication de la demande: 19.04.2017
(73) Titulaire: Safran Aero Boosters SA, 4041 Herstal (BE)
(72) Inventeur: OGGERO, Quentin, 4100 Boncelles (BE)
(74) Mandataire: Lecomte & Partners

(56) Documents cités:
- EP-A2- 2 481 893
- WO-A1-2014/182289
- US-A1- 2003 035 719

## Description

### Domaine technique

L'invention concerne le domaine des dispositifs dégivrants de turbomachines. Plus précisément, l'invention se rapporte à un dispositif dégivrant de bec de séparation en entrée de compresseur de turbomachine axiale. L'invention a également trait à une turbomachine axiale, notamment un turboréacteur d'avion.

### Technique antérieure

En vol, les turboréacteurs d'avion sont sujets au givrage. Un dépôt de givre se forme localement sur certaines surfaces. L'épaisseur et l'étendue de la couche de givre se développe, ce qui tend à alourdir l'avion. Qui plus est, un tel dépôt affecte le fonctionnement de la turbomachine lorsqu'il modifie la géométrie des surfaces guidant les flux nécessaires au fonctionnement du turboréacteur.

Au niveau du bec de séparation, l'entrée du compresseur s'obstrue. Le développement de la couche de givre la transforme en un amas de glace relativement épais. En raison des vibrations propres à la turbomachine, la glace peut se détacher sous forme de blocs massifs. Lorsque cela a lieu en entrée de compresseur, les blocs sont aspirés par le compresseur dont ils détériorent les aubes. Pour prévenir ce danger, le bec de séparation est muni d'un dispositif anti givre ou dégivrant.

Le document US2012/0192544 A1divulgue une turbomachine axiale dont le compresseur présente un dispositif de dégivrage du bec de séparation. Le dispositif fonctionne par circulation d'air chaud à l'intérieur du bec, puis réinjection de l'air à l'intérieur du compresseur. L'air est acheminé par un tuyau vers un plénum interne avant réinjection. Ce dernier est délimité par une bride radiale à laquelle est soudée une tôle annulaire pour améliorer la fixation et l'étanchéité. Toutefois, le soudage génère une dilatation perturbant le bon positionnement de la tôle ; si bien que la maîtrise de l'écoulement de l'air chaud est moins est précis. L'efficacité de dégivrage est pénalisée. De plus, l'étanchéité de la soudure reste relative.

Le document US2003/0035719 A1 propose deux modes de réalisation d'un bec de séparation pour un compresseur de turbomachine. Ces modes de réalisation incluent des dispositifs de dégivrage avec des brides annulaires orientées selon des directions opposées. Un mode de réalisation présente une séparation annulaire munie d'une bride radiale interne.

### Résumé de l'invention

### Problème technique

L'invention a pour objectif de résoudre au moins un des problèmes posés par l'art antérieur. Plus précisément, l'invention a pour objectif d'améliorer l'étanchéité d'un bec de dégivrage. L'invention a également pour objectif de proposer une solution simple, résistante, économique, fiable, améliorant le rendement, facile à produire et à contrôler.

### Solution technique

L'invention a pour objet un dispositif dégivrant de bec de séparation de turbomachine, notamment de compresseur, le dispositif comprenant : un bec de séparation qui comporte une bride radiale interne, et qui est profilé pour séparer un flux primaire et un flux secondaire de la turbomachine ; une virole disposée à l'intérieur du bec de séparation; un espace annulaire dégivrant entre le bec et la virole, notamment pour la circulation d'un fluide dégivrant ; et une séparation divisant annulairement l'espace annulaire ; remarquable en ce que la séparation comprend une bride radiale externe fixée à la bride interne du bec de séparation.

Selon des modes particuliers de réalisation, le dispositif peut comprendre une ou plusieurs des caractéristiques suivantes, prises isolément ou selon toutes les combinaisons techniques possibles :
- Le bec de séparation comprend des moyens de centrage de la séparation, préférentiellement les moyens de centrage sont configurés pour assurer un montage serré de la séparation dans les moyens de centrage.
- La séparation comprend un épaississement annulaire de centrage en contact circulaire des moyens de centrage, et/ou les moyens de centrage comprennent une surface tubulaire interne avec un état de surface Ra inférieur ou égal à 3,00 µm, préférentiellement inférieur ou égal 1,60 µm.
- La virole comprend une couronne annulaire externe fixée à la bride interne, la bride externe étant disposée axialement entre la bride interne et la couronne.
- La séparation s'étend sur sensiblement toute la longueur axiale du bec de séparation.
- Le bec de séparation comprend un crochet annulaire dans lequel est engagé axialement la virole externe et/ou la séparation.
- Le bord amont de la séparation comprend un épaississement annulaire amont avec des passages pour le fluide dégivrant ; et/ou le bord amont de la séparation affleure, ou est en contact circulaire du fond du crochet.
- Le dispositif comprend une interface annulaire étanche, éventuellement avec un joint d'étanchéité, entre la bride interne et la bride externe et/ou entre la bride externe et la couronne.
- Le dispositif comprend un tuyau d'alimentation en fluide dégivrant, notamment un gaz chaud, traversant chaque bride du bec de séparation et communiquant avec l'espace annulaire.
- Le dispositif comprend un échappement circulaire entre le bec de séparation et la virole, l'échappement étant éventuellement en communication fluidique avec l'espace annulaire au travers de la séparation.
- Le dispositif comprend au moins un, préférentiellement plusieurs axes de fixation, tel des boulons, fixant la bride externe à la bride interne, et éventuellement la virole.
- Le dispositif est configuré de manière à ce que la séparation, éventuellement en combinaison des moyens de centrage, divise l'espace annulaire en au moins trois sous-espaces annulaires.
- La virole comprend une moitié axiale, notamment une moitié amont, libre de contact avec la séparation.
- La virole comprend une rangée annulaire d'aubes s'étendant radialement vers l'intérieur, ladite rangée étant préférentiellement disposée en amont de la bride interne, et/ou au droit desdites aubes la virole est libre de contact avec la séparation.
- La virole comprend un joint annulaire interne, notamment un joint en matériau abradable, qui est préférentiellement disposé en aval de la bride interne.
- Le bec de séparation présente une surface de séparation apte à séparer les flux, la surface présentant un profil de révolution avec un rayon de courbure R inférieur ou égal à 5,00 cm au niveau du bord d'attaque du bec, préférentiellement inférieur ou égal à 1,00 cm, plus préférentiellement inférieur ou égal à 0,30 cm.
- La séparation traverse, notamment axialement, l'espace annulaire.
- La virole et la séparation se chevauchent axialement sur un tronçon axial où le dispositif comprend un compartiment tubulaire séparant la virole et la séparation.
- La couronne annulaire externe s'étend radialement vers l'extérieur de la virole.
- La bride interne et/ou les moyens de centrage du bec s'étendant radialement vers l'intérieur.
- Le bec comprend un bord d'attaque, par exemple formé sur le crochet annulaire.
- Le crochet est ouvert axialement vers l'aval.
- Le ou les axes de fixation traversent axialement la bride interne, et/ou la bride externe, et/ou la couronne.
- La couronne comprend au moins un feston externe, dont éventuellement un feston de passage de tuyau d'alimentation.
- Dans l'état démonté, le diamètre intérieur des moyens de centrage est au moins inférieur de 0,30 mm au diamètre de la zone de la séparation destinée à coopérer avec les moyens de centrage. Cette différence de diamètre permet un montage serré, notamment pour un diamètre intérieur de moyens de centrage compris entre 0.50 m et 2 m, par exemple égal à 1,7 m.
- Au moins deux, préférentiellement les trois éléments parmi le bec, la séparation et la virole comprennent des coefficients de dilatation égaux.
- Les moyens de centrage sont disposés axialement entre le bord d'attaque et la bride aval du bec.
- La bride radiale interne du bec de séparation est une bride aval, les moyens de centrage comprenant ou étant une bride radiale de centrage.

L'invention a également pour objet un dispositif dégivrant de bec de séparation de turbomachine, notamment de compresseur, le dispositif comprenant : un bec de séparation profilé pour séparer un flux primaire et un flux secondaire de la turbomachine ; une virole disposée à l'intérieur de la paroi annulaire ; un espace annulaire dégivrant entre le bec et la virole, notamment pour la circulation d'un fluide dégivrant ; une séparation divisant annulairement l'espace annulaire ; remarquable en ce que le bec comprend des moyens de centrage de la séparation configurés pour permettre un montage serré, préférentiellement étanche.

L'invention a également pour objet un compresseur, de turbomachine, notamment basse pression, comprenant un dispositif dégivrant, remarquable en ce que le dispositif est conforme à l'invention, préférentiellement le bec de séparation délimite l'entrée du compresseur.

L'invention a également pour objet une turbomachine, notamment un turboréacteur d'avion, comprenant un dispositif dégivrant, remarquable en ce que le dispositif est conforme à l'invention, préférentiellement la turbomachine comprend une soufflante disposée en amont du bec de séparation, et/ou la turbomachine comprend un compresseur conforme à l'invention.

Selon un mode avantageux de l'invention, la soufflante est apte à propulser un avion en vol.

De manière générale, les modes avantageux de chaque objet de l'invention sont également applicables aux autres objets de l'invention. Dans la mesure du possible, chaque objet de l'invention est combinable aux autres objets.

### Avantages apportés

L'invention permet de préserver l'étanchéité du dispositif tout en garantissant le débit du fluide dégivrant dans une plage donnée. La plage prédéterminée reste garantie pour différentes températures de fonctionnement, ainsi que pour différents niveaux de vibration de la turbomachine. La séparation reste à distance de la virole au niveau de ses aubes, ce qui limite la transmission des vibrations.

La solution est simple car elle emploie les boulons déjà nécessaires pour lier la virole au bec. Une seule opération de fixation relie trois éléments.

Les moyens de centrages sont adaptés pour en outre assurer une étanchéité circulaire avec la séparation annulaire. La rugosité Ra de 1,60 µm améliore encore l'étanchéité. Ce mode d'assemblage offre une étanchéité suffisante pour la pression et le fluide employé, malgré les phénomènes de dilatation tendant à ouvrir le contact séparation/moyens de centrage.

### Brève description des dessins

La figure 1 représente une turbomachine axiale selon l'invention.
La figure 2 illustre un compresseur de turbomachine selon un premier mode de réalisation de l'invention.
La figure 3 est une vue isométrique d'un éclaté du bec de séparation selon un premier mode de réalisation de l'invention.
La figure 4 montre une coupe d'un profil de révolution du dispositif dégivrant de bec de séparation selon un premier mode de réalisation de l'invention.
La figure 5 montre une coupe d'un profil de révolution du dispositif dégivrant de bec de séparation selon un deuxième mode de réalisation de l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

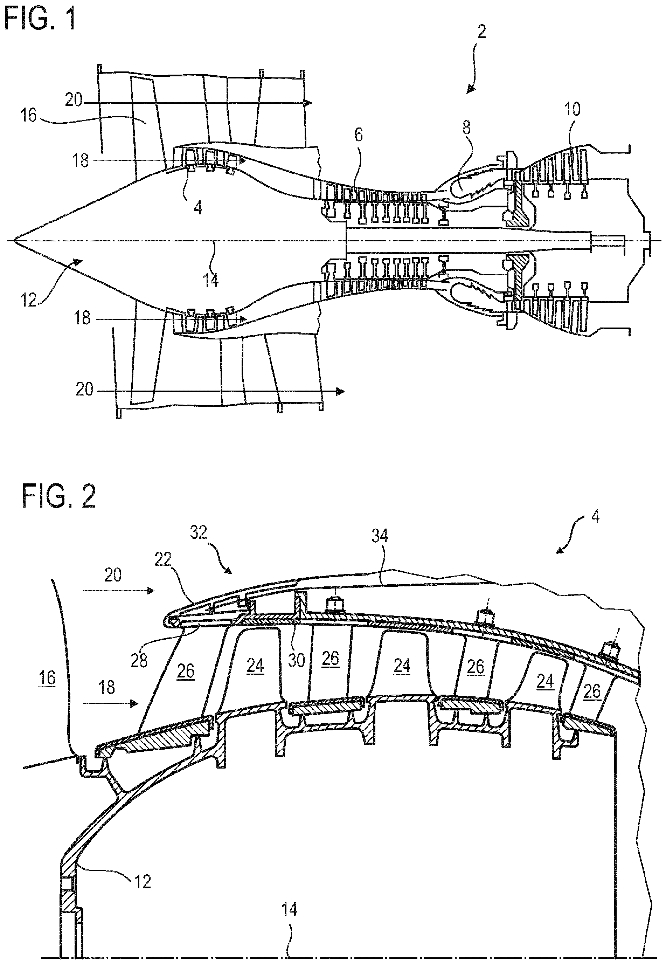

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires radialement concentriques.

La figure 2 est une vue en coupe d'un compresseur d'une turbomachine axiale telle que celle de la figure 1. Le compresseur peut être un compresseur basse-pression 4. On peut y observer une partie de la soufflante 16 et le bec de séparation 22 partageant le flux issu de la turbomachine entre la veine primaire du flux primaire 18 et la veine secondaire du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression statique. Les aubes statoriques 26 s'étendent essentiellement radialement depuis un carter extérieur ou depuis une virole externe 28. Le carter et la virole externe 28 supportent des moyens d'étanchéité internes 30 entourant chacun une rangée d'aubes rotoriques 24 associée. Une couche annulaire de matériau abradable 30 est appliquée sur la surface interne de la virole externe 28. Par matériau abradable on entend un matériau apte à s'effriter au contact des aubes rotoriques 24 afin de ne pas les détériorer.

Afin de préserver le compresseur 4 des phénomènes de givrages au niveau du bec de séparation 22, il est équipé d'un dispositif dégivrant 32 agissant sur le bec, et éventuellement sur les aubes 26 en entrée de compresseur 4, dites « inlet guide vanes » (IGV). Un tuyau 34 alimente le dispositif dégivrant 32 en fluide dégivrant. Le dispositif dégivrant 32 est apte à s'opposer à la formation de givre, ou à faire fondre du givre déjà formé. Il peut fonctionner par alternance.

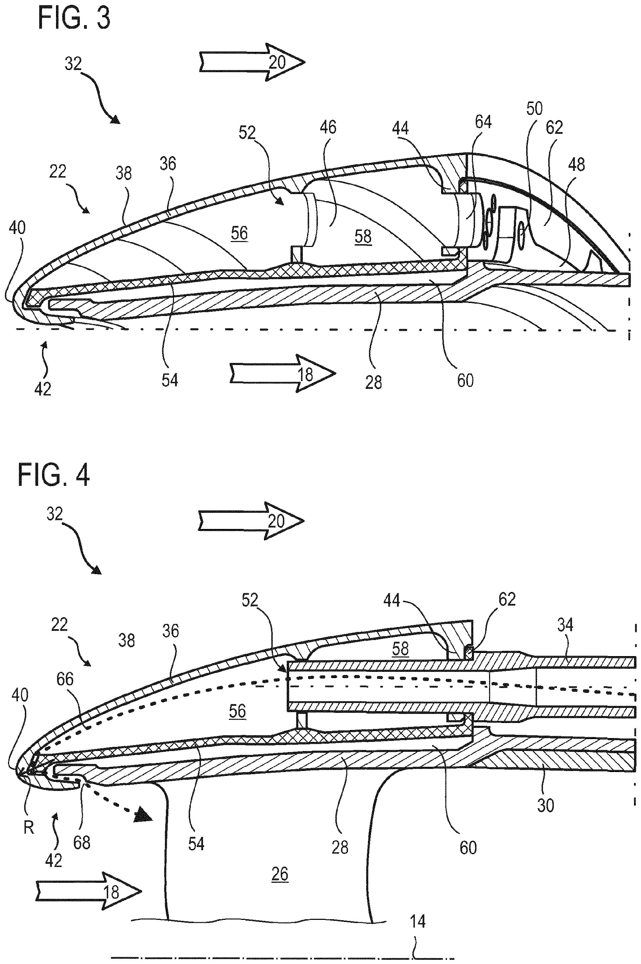

La figure 3 esquisse une vue isométrique du dispositif dégivrant 32 tel que celui montré en figure 2.

Le bec de séparation 22 comprend une paroi externe 36 de forme annulaire. La surface externe 38 de cette dernière guide, et est en contact des flux (18 ; 20). En amont, elle présente un bord d'attaque 40 circulaire qui permet de partager le flux entrant dans la turbomachine en un flux primaire 18 et en un flux secondaire 20. Cette paroi 36 présente une forme de crochet annulaire 42 en amont. Il reçoit d'ailleurs le bord d'attaque 40 et tranche les flux (18 ; 20). Il présente un retour permettant de supporter la virole externe 28. En aval, éventuellement en son extrémité aval, la paroi 36 présente une bride interne aval de fixation 44. Une bride de centrage 46 est disposée entre le bord d'attaque 40 et la bride interne aval 44. Ces brides (44 ; 46) du bec 22 s'étendent radialement vers l'intérieur et sont annulaires

La virole externe 28 est fixée au crochet 42. Elle présente une portée tubulaire amont en contact de la surface interne du crochet, ce qui permet un centrage. Des encoches sont ménagées dans l'épaisseur de cette portée pour y former des canaux d'échappement du fluide dégivrant. La virole 28 montre une couronne externe de fixation 48 permettant de la fixer à la bride interne aval 44 à l'aide de boulons (non représentés). Ces boulons sont engagés dans des orifices 50 alignés axialement.

La paroi 36 et la virole 28 définissent entre elle un espace de dégivrage 52 dans lequel transite le fluide employé pour dégivrer le bec de séparation 22. Cet espace est compartimenté par une séparation 54 également appelée plénum. Il peut s'agir d'une cloison généralement tubulaire. Cette séparation 54 permet de subdiviser l'espace en au moins deux compartiments annulaires formant des sous-espaces (56 ; 58 ; 60).

La séparation 54 présente une bride annulaire externe 62 qui s'étend radialement vers l'extérieur, et qui est fixée à la fois à la couronne 48 ainsi qu'à la bride interne aval 44 en employant les boulons utilisés pour relier la virole 28 au bec 22. Ceci permet d'économiser des moyens de fixation et simplifie l'assemblage car une seule opération permet de fixer les trois entités.

La bride externe 62 est disposée axialement entre la couronne 48 et la bride interne aval 44. Cela forme un empilement à trois couches améliorant la rigidité. Leurs interfaces sont étanches pour contenir l'écoulement du fluide dégivrant, des joints annulaires (non représentés) peuvent être intercalés. Le bec 22, la séparation 54 et la virole 28 peuvent être réalisés en un même alliage de titane. Ils peuvent chacun être une pièce monobloc. Un ajour 64 traverse la bride interne aval 44 et la bride externe 64 pour recevoir le tuyau d'alimentation.

La figure 4 présente une coupe du bec de séparation 22, tel que celui présenté en figure 3. Une aube statorique 26 est représentée liée à la virole externe 28, elle est représentative de sa rangée fixée à la virole.

De profil, l'espace annulaire 52 est ici partagé en trois sous-espaces annulaires (56 ; 58 ; 60). Le sous-espace externe amont 56 est délimité par la bride de centrage 46 et la partie amont de la séparation 54. Il accueille le fluide dégivrant 66 avant d'être réinjecté avec le flux primaire 18. Le sous-espace externe aval 58 est traversé par le tuyau , il est encadré par les brides (44 ; 46) du bec. Le sous-espace interne s'étend sur sensiblement toute la longueur de la séparation 54. Il conserve un écartement radial entre la virole 28 et la séparation 54, ce qui offre une isolation thermique radiale. La dilation thermique de la virole 28 est ainsi contenue.

Le tuyau d'alimentation 34 distribue le fluide dégivrant 66. Le tuyau 34 peut présenter une même portion monobloc traversant axialement chaque bride (44 ; 46) du bec pour une meilleure étanchéité. Le fluide dégivrant 66 est avantageusement un gaz chaud, par exemple prélevé à même le compresseur basse pression. Le fluide 66 peut être prélevé sur le compresseur haute pression, ou une turbine.

Le cheminement du fluide dégivrant 66 est tracé en pointillés. Il traverse l'espace annulaire 52, et en particulier le sous-espace externe amont 56. La présence de gaz chaud dans ce compartiment permet de réchauffer le bec 22, et en particulier sa paroi 36. Dans l'éventualité où du givre s'y serait formé, il serait fondu au travers de la paroi 36 par conduction thermique. Le fluide 66 peut être évacué du dispositif via l'échappement 68. Pour cela, le fluide 66 se faufile à l'intérieur du crochet 42 et contourne les bords amont de la séparation 54 et de la virole 28 respectivement. En se faufilant, le fluide chaud 66 est en contact du crochet 42, et le réchauffe au plus près du bord d'attaque 40. Il est réinjecté vers les aubes statoriques 26 pour y procurer un effet anti givre.

En aval de l'aube 26, la virole 28 supporte la couche d'abradable 30. Celle-ci est disposée en aval de la bride aval 44 et/ou de la bride externe 62. Elle peut commencer en aval de la séparation 54, ce qui la protège du réchauffement dégivrant. Dès lors, elle peut comporter un polymère.

Le bord d'attaque forme une lame circulaire. Il peut rester dans un plan perpendiculaire à l'axe de rotation 14. La surface de séparation 38 du bec présente un profil de révolution autour de l'axe 14. Au niveau du bord d'attaque, le rayon de courbure R du profil est inférieur ou égal à 6 cm, préférentiellement inférieur ou égal à 4,00 mm.

Le bec 22 comprend des moyens de centrage de la séparation 54. Il peut s'agir de sa bride de centrage 46. Les moyens de centrage 46 comprennent une surface tubulaire maintenant la séparation annulaire 54, et permettent d'assurer une concentricité. Le montage entre les moyens de centrage 46 et la séparation 54 peut être un montage serré. Lorsque ces éléments sont démontés, une différence de diamètre d'au moins 0,30 mm est prévue au niveau de leurs zones devant coopérer. Le diamètre externe de la séparation 54 est sensiblement supérieur au diamètre intérieur des moyens de centrage 46. La différence de diamètre peut se mesurer sur la surépaisseur annulaire de la séparation. Les moyens de centrage sont configurés pour qu'un effort axial compris entre 50 N et 1000 N permette d'emmancher la séparation dans le bec, préférentiellement compris entre 100 N et 500 N. L'ajustement mécanique de type montage serré permet de conserver une étanchéité entre les sous-espaces extérieurs malgré la dilation différentielle ouvrant le bec 22.

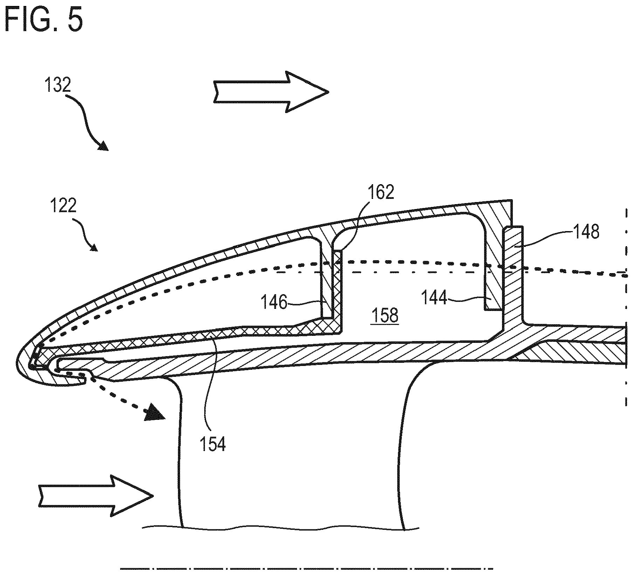

La figure 5 présente une coupe du bec de séparation 122 selon un deuxième mode de réalisation de l'invention. Cette figure 5 reprend la numérotation des figures précédentes pour les éléments identiques ou similaires, la numération étant toutefois incrémentée de 100. Le tuyau d'alimentation n'est pas représenté par soucis de clarté, il est esquissé via un trait mixte. Toujours par soucis de clarté, les formes de brides (146 ; 162 ; 144 ; 148) sont représentées pleines ; c'est-à-dire sans leur orifices ou ajours afin de mettre en évidence leurs chevauchements radiaux.

Le bec de séparation 122 selon le deuxième mode de réalisation est sensiblement identique à celui du premier mode de réalisation. La figure 5 est sensiblement identique à la figure 4. Néanmoins, le deuxième mode de réalisation se distingue du premier en ce que la bride radiale externe 162 de la séparation 154 est liée aux moyens de centrage 146 et non à la bride radiale interne 144 du bec de séparation 122. L'espace 158 est ainsi modifié. Il est agrandi radialement vers l'intérieur. A présent, la couronne annulaire externe 148 est liée à la bride radiale interne 144 du bec de séparation 122.

## Revendications

1. Dispositif dégivrant (32) de bec de séparation (22) de turbomachine (2), notamment de compresseur (4), le dispositif (32) comprenant :
- un bec de séparation (22) qui comporte une bride radiale interne (44), et qui est profilé pour séparer un flux primaire (18) et un flux secondaire (20) de la turbomachine (2) ;
- une virole (28) disposée à l'intérieur du bec de séparation (22) ;
- un espace annulaire (52) dégivrant entre le bec (22) et la virole (28), notamment pour la circulation d'un fluide dégivrant (66) ; et
- une séparation (54) divisant annulairement l'espace annulaire (52) ;
**caractérisé en ce que**
la séparation (54) comprend une bride radiale externe (62) fixée à la bride interne (44) du bec de séparation (22).

2. Dispositif (32) selon la revendication 1, **caractérisé en ce que** le bec de séparation (22) comprend des moyens de centrage (46) de la séparation (54), préférentiellement les moyens de centrage (46) sont configurés pour assurer un montage serré de la séparation (54) dans les moyens de centrage (46).

3. Dispositif (32) selon la revendication 2, **caractérisé en ce que** la séparation (54) comprend un épaississement annulaire de centrage en contact circulaire des moyens de centrage (46), et/ou les moyens de centrage (46) comprennent une surface tubulaire interne avec un état de surface Ra inférieur ou égal à 3,00 µm, préférentiellement inférieur ou égal 1,60 µm.

4. Dispositif (32) selon l'une des revendications 1 à 3, **caractérisé en ce que** la virole (28) comprend une couronne annulaire externe (48) fixée à la bride interne (44), la bride externe (62) étant disposée axialement entre la bride interne (44) et la couronne (48).

5. Dispositif (32) selon l'une des revendications 1 à 4, **caractérisé en ce que** la séparation (54) s'étend sur sensiblement toute la longueur axiale du bec de séparation (22).

6. Dispositif (32) selon l'une des revendications 1 à 5, **caractérisé en ce que** le bord amont de la séparation (54) comprend un épaississement annulaire amont avec des passages pour le fluide dégivrant (66), et/ou le bord amont de la séparation (54) affleure ou est en contact circulaire du fond du crochet (42).

7. Dispositif (32) selon l'une des revendications 1 à 6, **caractérisé en ce qu'**il comprend une interface annulaire étanche, éventuellement avec un joint d'étanchéité, entre la bride interne (44) et la bride externe (62) et/ou entre la bride (62) externe et la couronne (48).

8. Dispositif (32) selon l'une des revendications 1 à 7, **caractérisé en ce qu'**il comprend au moins un, préférentiellement plusieurs axes de fixation, tel des boulons, fixant la bride externe (62) à la bride interne (44), et éventuellement la virole (28).

9. Dispositif (32) selon l'une des revendications 1 à 8, **caractérisé en ce qu'**il est configuré de manière à ce que la séparation (54), éventuellement en combinaison des moyens de centrage (46), divise l'espace annulaire (52) en au moins trois sous-espaces annulaires (56 ; 58 ; 60).

10. Dispositif (32) selon l'une des revendications 1 à 9, **caractérisé en ce que** la virole (28) comprend une moitié axiale, notamment une moitié amont, libre de contact avec la séparation (54).

11. Dispositif (32) selon l'une des revendications 1 à 10, **caractérisé en ce que** la virole (28) comprend une rangée annulaire d'aubes (26) s'étendant radialement vers l'intérieur, ladite rangée étant préférentiellement disposée en amont de la bride interne (44), et/ou au droit desdites aubes la virole (28) est libre de contact avec la séparation (54).

12. Dispositif (32) selon l'une des revendications 1 à 11, **caractérisé en ce que** la virole (28) comprend un joint annulaire interne (30), notamment un joint en matériau abradable, qui est préférentiellement disposé en aval de la bride interne (44).

13. Dispositif (32) selon l'une des revendications 1 à 12, **caractérisé en ce que** le bec de séparation (22) présente une surface de séparation (38) apte à séparer les flux (18 ; 20), la surface présentant un profil de révolution avec un rayon de courbure R inférieur ou égal à 5,00 cm au niveau du bord d'attaque (40) du bec (22), préférentiellement inférieur ou égal à 1,00 cm, plus préférentiellement inférieur ou égal à 0,30 cm.

14. Compresseur (4) de turbomachine (2), notamment basse pression, comprenant un dispositif dégivrant (32), **caractérisé en ce que** le dispositif (32) est conforme à l'une des revendications 1 à 13, préférentiellement le bec de séparation (22) délimite l'entrée du compresseur (4).

15. Turbomachine (2), notamment un turboréacteur d'avion, comprenant un dispositif dégivrant (32), **caractérisée en ce que** le dispositif (32) est conforme à l'une des revendications 1 à 13, préférentiellement la turbomachine (2) comprend une soufflante (16) disposée en amont du bec de séparation, et/ou la turbomachine (2) comprend un compresseur (4) conforme à la revendication 14.

## Patentansprüche

1. Enteisungsvorrichtung (32) für einen Trennungschnabel (22) einer Turbomaschine (2), insbesondere eines Kompressors (4), wobei die Vorrichtung (32) umfasst:
- einen Trennungsschnabel (22), der einen inneren radialen Flansch (44) umfasst, und der profiliert ist, um einen primären Fluss (18) und einen sekundären Fluss (20) der Turbomaschine (2) zu trennen;
- eine Umringung (28), die im Inneren des Trennschnabels (22) angeordnet ist;
- einen ringförmigen Enteisungsraum (52) zwischen dem Schnabel (22) und der Umringung (28), insbesondere für die Zirkulation eines Enteisungsfluids (66); und
- eine Abtrennung (54), die den ringförmigen Raum (52) ringförmig teilt;
**dadurch gekennzeichnet, dass**
die Abtrennung (54) einen äußeren radialen Flansch (62) umfasst, der an dem inneren Flansch (44) des Trennungschnabels (22) befestigt ist.

2. Vorrichtung (32) gemäß dem Anspruch 1, **gekennzeichnet dadurch, dass** der Trennungschnabel (22) Zentrierungsmittel (46) der Abtrennung (54) umfasst, wobei die Zentrierungsmittel (46) vorzugsweise konfiguriert sind, um eine Presspassung der Abtrennung (54) in den Zentrierungsmitteln (46) sicherzustellen.

3. Vorrichtung (32) gemäß dem Anspruch 2, **gekennzeichnet dadurch, dass** die Abtrennung (54) eine ringförmige Zentrierungsverdickung in kreisförmigem Kontakt mit den Zentrierungsmitteln (46) aufweist und/oder die Zentrierungsmittel (46) eine innere schlauchförmige Oberfläche mit einer Oberflächenbeschaffenheit Ra kleiner oder gleich 3,00 µm umfassen, vorzugsweise kleiner oder gleich 1,60 µm.

4. Vorrichtung (32) gemäß einem der Ansprüche 1 bis 3, **gekennzeichnet dadurch, dass** die Umringung (28) eine äußere ringförmige Krone (48) aufweist, die an dem inneren Flansch (44) befestigt ist, wobei der äußere Flansch (62) axial zwischen dem inneren Flansch (44) und der Krone (48) angeordnet ist.

5. Vorrichtung (32) gemäß einem der Ansprüche 1 bis 4, **gekennzeichnet dadurch, dass** sich die Abtrennung (54) über im Wesentlichen die gesamte axiale Länge des Trennungsschnabels (22) erstreckt.

6. Vorrichtung (32) gemäß einem der Ansprüche 1 bis 5, **gekennzeichnet dadurch, dass** der stromaufwärtige Rand der Abtrennung (54) eine stromaufwärtige ringförmige Verdickung mit Durchgängen für das Enteisungsfluid (66) aufweist und/oder dass der stromaufwärtige Rand der Abtrennung (54) bündig ist mit oder in kreisförmigem Kontakt ist mit der Hinterseite der Halterung (42).

7. Vorrichtung (32) gemäß einem der Ansprüche 1 bis 6, **gekennzeichnet dadurch, dass** sie eine ringförmige dichte Verbindungssstelle, möglicherweise mit einem Dichtungsring, zwischen dem inneren Flansch (44) und dem äußeren Flansch (62) und/oder zwischen dem äußeren Flansch (62) und der Krone (48) umfasst.

8. Vorrichtung (32) gemäß einem der Ansprüche 1 bis 7, **gekennzeichnet dadurch, dass** sie mindestens einen, vorzugsweise mehrere Befestigungsachsen wie beispielsweise Bolzen aufweist, die den äußeren Flansch (62) an dem inneren Flansch (44) und möglicherweise die Umringung (28) befestigen.

9. Vorrichtung (32) gemäß einem der Ansprüche 1 bis 8, **gekennzeichnet dadurch, dass** sie derart konfiguriert ist, dass die Abtrennung (54), möglicherweise in Kombination mit Zentrierungsmitteln (46), den ringförmigen Raum (52) in zumindest drei ringförmige Unterräume (56; 58; 60) teilt.

10. Vorrichtung (32) gemäß einem der Ansprüche 1 bis 9, **gekennzeichnet dadurch, dass** die Umringung (28) eine axiale Hälfte, insbesondere eine stromaufwärtige Hälfte umfasst, die nicht in Kontakt mit der Abtrennung (54) ist.

11. Vorrichtung (32) gemäß einem der Ansprüche 1 bis 10, **gekennzeichnet dadurch, dass** die Umringung (28) eine ringförmige Reihe von Schaufeln (26) umfasst, sich sich radial nach innen erstrecken, wobei die besagte Reihe vorzugsweise stromaufwärts des inneren Flansches (44) angeordnet ist und/oder wobei in der Nähe der besagten Schaufel die Umringung (28) nicht in Kontakt mit der Abtrennung (54) ist.

12. Vorrichtung (32) gemäß einem der Ansprüche 1 bis 11, **gekennzeichnet dadurch, dass** die Umringung (28) eine innere ringförmige Dichtung (30) umfasst, insbesondere eine Dichtung aus zerreibbarem Material, welche vorzugsweise stromabwärts des inneren Flansches (44) angeordnet ist.

13. Vorrichtung (32) gemäß einem der Ansprüche 1 bis 12, **gekennzeichnet dadurch, dass** der Trennungsschnabel (22) eine Trennungsoberfläche (38) hat, die dazu angepasst ist, die Flüsse (18; 20) zu trennen, wobei die Oberfläche ein Umlaufprofil mit einem Krümmungsradius R kleiner oder gleich als 5,00 cm auf der Höhe der Angriffskante (40) des Schnabels (22) hat, vorzugsweise kleiner oder gleich 1,00, noch bevorzugter kleiner oder gleich 0,30 cm.

14. Kompressor (4) einer Turbomaschine (2), insbesondere Niederdruck, umfassend eine Enteisungsvorrichtung (32), **gekennzeichnet dadurch, dass** die Vorrichtung (32) gemäß einem der Ansprüche 1 bis 13 ist, wobei der Trennungsschnabel (22) vorzugsweise den Eingang des Kompressors (4) begrenzt.

15. Turbomaschine (2), insbesondere Flugzeugstrahltriebwerk, umfassend eine Enteisungsvorrichtung (32), **gekennzeichnet dadurch, dass** die Vorrichtung (32) gemäß einem der Ansprüche 1 bis 13 ist, wobei die Turbomaschine (2) vorzugsweise ein Gebäse (16) umfasst, das stromaufwärts des Trennungsschnabels angeordnet ist, und/oder die Turbomaschine (2) einen Kompressor (4) gemäß dem Anspruch 14 umfasst.

## Claims

1. De-icing device (32) for a splitter nose (22) of a turbomachine (2), in particular for a compressor (4), the device (32) comprising:
- a splitter nose (22) that has an inner radial flange (44) and that is shaped to separate a primary flow (18) and a secondary flow (20) of the turbomachine (2),
- a shroud (28) arranged inside the splitter nose (22),
- a de-icing annular space (52) between the nose (22) and the shroud (28), in particular for circulation of a de-icing fluid (66), and
- a partition (54) dividing the annular space (52) annularly,
**characterized in that**
the partition (54) includes an outer radial flange (62) attached to the inner flange (44) of the splitter nose (22).

2. Device (32) according to claim 1, **characterized in that** the splitter nose (22) includes means (46) for centring the partition (54), the centring means (46) preferably being arranged to enable the press fitting of the partition (54) in the centring means (46).

3. Device (32) according to claim 2, **characterized in that** the partition (54) includes an annular centring thickening in circular contact with the centring means (46) and/or the centring means (46) include an inner tubular surface with a surface condition Ra equal to or less than 3.00 µm, preferably equal to or less than 1.60 µm.

4. Device (32) according to one of claims 1 to 3, **characterized in that** the shroud (28) includes an outer annular ring (48) attached to the inner flange (44), the outer flange (62) being arranged axially between the inner flange (44) and the ring (48).

5. Device (32) according to one of claims 1 to 4, **characterized in that** the partition (54) extends along substantially all of the axial length of the splitter nose (22).

6. Device (32) according to one of claims 1 to 5, **characterized in that** the upstream edge of the partition (54) includes an upstream annular thickening with passages for the de-icing fluid (66) and/or the upstream edge of the partition (54) is flush or in circular contact with the back of the hook (42).

7. Device (32) according to one of claims 1 to 6, **characterized in that** it includes a sealed annular interface, potentially with a sealing gasket, between the inner flange (44) and the outer flange (62) and/or between the outer flange (62) and the ring (48).

8. Device (32) according to one of claims 1 to 7, **characterized in that** it includes one, and preferably several, fitting bolts, attaching the outer flange (62) to the inner flange (44), and potentially the shroud (28).

9. Device (32) according to one of claims 1 to 8, **characterized in that** it is arranged such that the partition (54), potentially in combination with the centring means (46), divides the annular space (52) into at least three annular sub-spaces (56; 58; 60).

10. Device (32) according to one of claims 1 to 9, **characterized in that** the shroud (28) includes an axial half, in particular an upstream half, that is not in contact with the partition (54).

11. Device (32) according to one of claims 1 to 10, **characterized in that** the shroud (28) includes an annular row of blades (26) extending radially inwards, said row being preferably arranged upstream of the inner flange (44) and/or there is no contact between the shroud (28) and the partition (54) near said blades.

12. Device (32) according to one of claims 1 to 11, **characterized in that** the shroud (28) includes an inner ring seal (30), in particular a seal made of an abradable material, that is preferably arranged downstream of the inner flange (44).

13. Device (32) according to one of claims 1 to 12, **characterized in that** the splitter nose (22) has a separation surface (38) that is able to separate the flows (18; 20), the surface having a profile of revolution with a radius of curvature R equal to or less than 5.00 cm at the leading edge (40) of the nose (22), preferably equal to or less than 1.00 cm, and more preferably still equal to or less than 0.30 cm.

14. Compressor (4) of a turbomachine (2), in particular a low-pressure compressor, comprising a de-icing device (32), **characterized in that** the device (32) is as claimed in one of claims 1 to 13, in which the splitter nose (22) preferably delimits the intake of the compressor (4).

15. Turbomachine (2), in particular an aeroplane turbo-jet engine, comprising a de-icing device (32), **characterized in that** the device (32) is as claimed in one of claims 1 to 13, in which the turbomachine (2) preferably includes a fan (16) arranged upstream of the splitter nose, and/or the turbomachine (2) includes a compressor (4) according to Claim 14.
